# EUROPÄISCHE PATENTSCHRIFT

(11) **EP 1 872 663 B1**
(45) Veröffentlichungstag und Bekanntmachung des Hinweises auf die Patenterteilung: **17.06.2009**
(21) Anmeldenummer: 07012459.9
(22) Anmeldetag: 26.06.2007
(51) Int. Cl.: A22C 13/00, B65B 9/20

(54) **Verfahren zur Verpackung und Reifung von Fleischprodukten**
Method for packing and maturing meat products
Procédé destiné à l'emballage et de maturation de produits à base de viande

(30) Priorität: 30.06.2006 DE 102006030692
(43) Veröffentlichungstag der Anmeldung: 02.01.2008
(73) Patentinhaber: World Pac International AG, 9486 Schaanwald (LI)
(72) Erfinder:
(74) Vertreter: Lemcke, Brommer & Partner

(56) Entgegenhaltungen:
- EP-A1- 1 203 733
- EP-A2- 0 177 992
- WO-A-03/030647
- WO-A-20/05013701
- US-A- 3 066 461

## Beschreibung

Die Erfindung betrifft ein Verfahren zur Verpackung von Fleischprodukten, insbesondere Wurstwaren, indem eine Flachfolie aus Kunststoff einem Füllrohr zugeführt und dabei in eine etwa zylindrische, das Füllrohr umgebende Form gebracht und an den überlappenden Rändern verschweißt wird, wobei das Fleischprodukt über das Füllrohr in den so gebildeten Folienschlauch eingefüllt und der Schlauch anschließend an den Enden verschlossen und vereinzelt wird.

Das genannte Verfahren wird in großem Umfang zur Wurstverpackung, aber auch zur Verpackung von Käse, Kräuterbutter und dergleichen eingesetzt. Ein wesentlicher Vorteil besteht darin, dass die von Rollen abziehbare Flachfolie zu unterschiedlich großen Kalibern geformt und automatisch an den überlappenden Rändern verschweißt und gleichzeitig mit dem Produkt gefüllt wird. Nach dem Einfüllen der gewünschten Produktmenge wird der Schlauch durch zwei nahe aufeinanderfolgende Klipse oder dergleichen verschlossen und zwischen den Klipsen durchtrennt, so dass die Würste bereits in vereinzelter Form aus der Verpackungs- und Füllmaschine ausgegeben werden.

Dabei wird mit Wasserdampf- und Sauerstoff- undurchlässigen Mono- oder Verbundfolien gearbeitet, wobei wesentlich ist, dass die Folie gut schweißbar ist, damit die überlappenden Ränder rasch und zuverlässig durch Wärmezufuhr verbunden werden können.

Das beschriebene Verfahren ist bis jetzt allerdings nur für ausgereifte Fleischprodukte wie Brühwurst, Kochwurst und andere Nahrungsmittel wie Kräuterbutter, Schmelzkäse etc. in der Anwendung, also für solche Lebensmittel, die nach der Verpackung keiner Reifung mehr bedürfen, sondern dicht gegenüber der Umgebung abgeschlossen sein sollen und allenfalls noch gebrüht werden.

Hingegen ist es bei allen anderen Fleischprodukten, die durch Trocknung reifen oder haltbar gemacht werden sollen, also beispielsweise bei Rohwürsten, Halbdauerwaren und dergleichen - am Bekanntesten sind Salamiwürste - notwendig, die Verpackungshüllen entweder aus Naturdärmen oder nicht essbaren Cellulose-Faserdärmen und Collagendärmen, gegebenenfalls verstärkt durch Zellulose, herzustellen, weil nur solche wasserdampfdurchlässige Hüllen die Trocknung des verpackten Produktes gestatten. Allerdings sind solche Hüllen erheblich umständlicher in der Handhabung. So besteht bei Naturdärmen das Problem, dass sie nicht kostengünstig hergestellt und verarbeitet werden können und außerdem nur in bestimmten Kalibern zur Verfügung stehen. Werden stattdessen Hüllen aus Collagen und gegebenenfalls Zellulose verwendet, so ist eine Vorbehandlung mit Säuren, Laugen und Wasser zum Koagulieren, Neutralisieren und Auswaschen erforderlich,

Einen weiteren aufwendigen Prozess stellt die Konfektionierung der genannten Hüllen dar: Die Hüllen müssen nach ihrer Herstellung gerafft werden, das heißt, mechanisch zu einer Raupe zusammengeschoben werden, damit sie platzsparend zum Abfüller transportiert werden können. Dies bedingt eine Befeuchtung der Hüllen vor dem Raffen, damit sie weich und flexibel werden und bei der mechanischen Belastung durch die Raffräder der Raffmaschine nicht beschädigt werden. Nach dem Raffprozess müssen die gerafften, feuchten Hüllen wieder auf die gewünschte Restfeuchtigkeit getrocknet werden, um Schimmelbildung zu verhindern.

Der Verarbeiter bzw. Abfüller muss dann diese Raupen mittels Einweichen in Wasser vor dem Füllvorgang wieder befeuchten, damit die Hüllen der Füllmaschine zugeführt werden können. Dieses Einweichen birgt ebenfalls ein hohes hygienisches Risiko.

Wird die geraffte Hülle jedoch in befeuchtetem Zustand, also füllfertig an den Abfüller geliefert, so muss dem Wasser, welches zur Befeuchtung notwendig ist, eine Chemikalie zugesetzt werden, um Schimmeibildung zu verhindern. Außerdem muss die feuchte Raupe in einem für Wasserdampf undurchlässigen Behälter zum Abfüller transportiert werden, um ein Austrocknen zu verhindern.

Hiervon ausgehend liegt die Aufgabe der vorliegenden Erfindung darin, das an sich bekannte Verpackungsverfahren für Fleischprodukte in der Weise zu verbessern, dass auch Rohfleischprodukte, die nach der Verpackung noch einen Trocknungs- und Reifeprozess durchlaufen müssen, unter Vermeidung der vorgenannten Probleme verpackt werden können.

Diese Aufgabe wird erfindungsgemäß dadurch gelöst, dass die Flachfolie zur Anwendung bei Rohfleischprodukten, insbesondere bei Rohwurst- und Halbdauerwaren aus einem Vlies besteht, das mit einem Anteil von zumindest 80 % aus langfaserigen Kunststoff-Fasern hergestellt wird und eine Wasser- und/oder Dampf-Durchlässigkeit von zumindest 40 g/m²d aufweist und dass die verpackten Rohfleischprodukte anschließend durch Feuchtigkeitsentzug und/oder Räuchern haltbar gemacht werden.

Durch eine derartige Vlies-Folie können die bisher bei Rohwurstprodukten notwendigen Naturdärme und Collagen- und Faserhüllen ersetzt werden. Die Herstellung und Konfektionierung der Hüllen wird dadurch erheblich vereinfacht. Insbesondere die nicht mehr erforderliche Befeuchtung vor dem Raffen der Hüllen wie auch vor dem Füllen entfällt. Außerdem sind die hygienischen Bedingungen bei Anwendung der erfindungsgemäßen Folie bedeutend günstiger.

Um die angestrebte Trocknung und Reifung in möglichst kurzer Zeit zu realisieren, empfiehlt es sich, dass die Folie eine Wasser- und Dampfdurchlässigkeit von über 100 glm²d, vorzugsweise über 150 g/m²d aufweist.

Außerdem sollte die Folie auch gasdurchlässig sein, damit während des Reifeprozesses entstehende Gase entweichen können.

Damit diese Eigenschaften optimal realisiert werden, empfiehlt es sich, dass die Kunststofffasern mit einer Faserlänge von zumindest 5 mm, vorzugsweise zumindest 50 mm extrudiert werden. Am Günstigsten ist es, mit einer Endlosfaser zu arbeiten Die Faser(n) wird/werden kreuz und quer neben- und übereinander gelegt und dann an den Berühr- bzw. Kreuzungspunkten miteinander verschweißt. Dadurch lässt sich die gewünschte Durchlässigkeit wie auch die erforderliche Festigkeit garantieren.

Die Dicke der Folien wird so gewählt, dass sich ein Foliengewicht von mindestens 30 g/m², höchstens 300 g/m² einstellt. Der bevorzugte Bereich liegt zwischen 40 g/m² und 200 g/m².

Als Material für die Fasern eignen sich insbesondere Polyvinylidenchlorid, Polyamid, Polypropylen, Polyester und/oder Polyethylen aus denen im Spun-Bond-Verfahren eine schweißfähige Vlies-Folie hergestellt wird. Es liegt auch im Rahmen der Erfindung mit Fasern aus anderen Werkstoffen zu arbeiten, so lange die Fasern eine Ummantelung aus einem schweiß- bzw. siegelbaren Kunststoff, insbesondere also aus thermoplastischem Kunststoff aufweisen.

Wesentlich und für die Verpackung von Rohfleischprodukten außergewöhnlich ist außerdem, dass die Vliesfolie dem Füllrohr ohne vorheriges Befeuchten zugeführt wird. Dies gilt auch dann, wenn sie vor dem Umlegen auf das Füllrohr in geraffte Form gebracht wird.

Im Allgemeinen müssen die eingefüllten Rohfleischprodukte anschließend noch eine Zeit lang reifen. Deshalb empfiehlt es sich in Weiterbildung der Erfindung, die Flachfolie vor dem Einfüllvorgang mit Konservierungsstoffen, insbesondere Kaliumsorbat zu behandeln. Dadurch wird die Gefahr der Schimmelbildung, die bei Rohfleischprodukten erheblich höher ist als bei den herkömmlich eingefüllten Produkten, deutlich verringert.

Außerdem kann es zweckmäßig sein, die Flachfolie mit Propylenglykol und/oder Glycerin zu behandeln, damit sie weicher und besser schälbar wird.

Die vorgenannten Behandlungen können zweckmäßig in der Weise durchgeführt werden, dass Kaliumsorbat und/oder Propylenglykol und/oder Glycerin in Wasser gelöst werden und die Folie durch ein damit gebildetes Tauchbad hindurchgezogen wird. Anschließend werden oberflächlich anhaftende Reste der Lösung durch Rollen, Abstreifer oder dergleichen entfernt. Das genannte Tauchbad enthält zweckmäßig etwa 10 bis 30 % Propylenglykol, etwa 5 bis 20 % Glycerin und etwa 1 bis 10 % Kaliumsorbat.

Um das Ablösen der Folie vom Produkt zu erleichtern, kann es sich je nach Art des Produktes empfehlen, dass die Folie an der dem Produkt zugewandten Seite eine Antihaftbeschichtung aufweist. Die Dicke dieser Antihaftbeschichtung liegt im µ-Bereich. Vorzugsweise besteht sie aus Cellulose, Acrylat und andere dem Fachmann bekannte Substanzen, wobei auch Flüssigrauch oder andere Aromastoffe geeignet sind, wenn man gleichzeitig den Geschmack des Produktes beeinflussen will. Auch andere Beschichtungen der Folie sind möglich, etwa um ihre Durchlässigkeit zu steuern.

Die Flachfolie wird zweckmäßigerweise vollständig aus langfaserigen Kunststoff-Fasern hergestellt; es liegt aber auch im Rahmen der Erfindung, etwa 15 % bis etwa 20 % Fremdfasern, insbesondere Zellstofffasern oder Derivate hiervon zuzusetzen.

Für die erfindungsgemäße Anwendung des an sich bekannten Verpackungsverfahrens bei Rohfleischprodukten ist es entscheidend, dass die Produkte nach der Verpackung durch Feuchtigkeitsentzug und/oder Räuchern haltbar gemacht werden können, das heißt, dass die Folie eine genügende Wasser- und/oder Dampfdurchlässigkeit aufweist. Diese Durchlässigkeit ist im Überlappungsbereich der Folienränder, also dort, wo die Ränder zur Bildung eines Schlauches miteinander verschweißt sind, herabgesetzt. Deshalb empfiehlt es sich, diesen Bereich nach dem Verschweißen bzw. Heißsiegeln zu stippen, das heißt, zahlreiche Mikrolöcher anzubringen, damit dort die Gas- und Feuchte-Durchlässigkeit etwa ebenso gut ist wie in dem nicht verschweißten Folienbereich.

Weitere Einzelheiten der Erfindung ergeben sich aus der nachfolgenden Beschreibung eines Ausführungsbeispieles und aus der Zeichnung; dabei zeigt
- Figur 1: eine schematische Darstellung der Füllanlage;
- Figur 2: die einzelnen Verfahrensschritte.

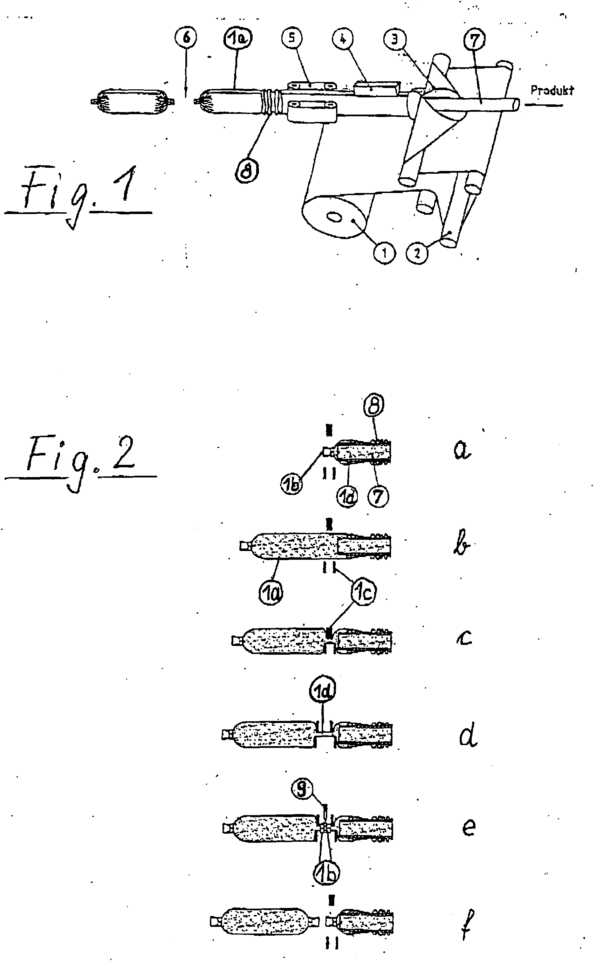

In Figur 1 erkennt man zunächst eine Rolle mit der erfindungsgemäßen Flachfolie 1. Es handelt sich dabei um ein Faser-Vlies, das aus einer Endlosfaser hergestellt worden ist. Die Faser ist aus einem PET (Polyethylen Terephthalat) Kern und einer PE (Polyethylen) Ummantelung koextrudiert und hat einen Durchmesser von 5 µ bis ca. 100 µ, zweckmäßig ca. 10 bis ca. 50 µ. Sie wird geordnet oder wirr in neben- und übereinanderliegenden Strängen auf einer Unterlage ausgelegt, so dass sich ein Flächengewicht von etwa 20 g/m² bis etwa 200 g/m² ergibt. Dieses Vlies wird dann punktuell heiß versiegelt, so dass ein sogenanntes Spun-Bond-Matarial entsteht. Es wird in die gewünschte Breite (ca. 3 m) und Länge (ca. 2000 m) geschnitten und auf Vorratsrollen aufgerollt. Von dort wird die Folie in einer solchen Breite abgetrennt, dass sie beim Umformen in die Schlauchform das gewünschte Kaliber der Wurst ergibt mit einer Randüberdeckung von wenigen Millimetern, so dass die Überlappungsbreite für die Verbindung beider Folienränder in einer Heißsiegelstation ausreicht.

Nach der Herstellung der Flachfolie wird sie zweckmäßig noch durch Konservierungsstoffe behandelt, damit sie besser für die spätere Anwendung bei Rohfleischprvdukten geeignet ist. Diese Behandlung erfolgt zweckmäßig durch eine Lösung bakterizider und/oder fungizider Konservierungsstoffe. Diese Stoffe werden durch Sprühen oder durch ein Tauchbad auf die Folie aufgebracht. Danach werden sie gegebenenfalls oberflächlich von der Folie abgestreift, bleiben aber im Inneren der Folie und haben dadurch eine länger andauernde Wirkung als bei einer Konservierung durch Hitze oder durch Trocknung. Geeignete Konservierungsmittel sind Sorbate, Benzoate, Sulfite, Nitride, Acetate, Propionate und andere lebensmittelrechtlich zugelassene Stoffe. Für den vorliegenden Anwendungsfall eignet sich insbesondere eine wässrige Lösung mit Sorbinsäure oder Sorbaten, gegebenenfalls mit weiteren Stoffen.

Die so behandelte Folie 1 wird von einer Vorratsrolle über eine vertikal frei bewegliche Tänzerwalze 2 abgezogen und einer Formschulter 3 zugeführt. Mittels dieser Formschulter wird die Folie in bekannter Weise in zylindrische Form gebracht, wobei sie um ein Füllrohr 7 herumgelegt wird. Die so zum Schlauch 1 a geformte Folie 1 wird dann an einem Schweißbalken 4 entlanggeführt, der die überlappenden Folienränder erhitzt und versiegelt. Die Siegelfläche kann mit Mikroöffnungen gelocht werden, um ihre Durchlässigkeit zu verbessern. Die schlauchförmige versiegelte Hülle wird durch Förderbänder 5 weiterbefördert in einen Raffbereich 8, der in der Nähe des Austrittsendes des Füllrohres 7 liegt. Hieran schließt sich eine Klipmaschine 6 an, wo der Folienschlauch abgeklipst und vereinzelt wird.

Figur 2 verdeutlicht die Verfahrensschritte im Einzelnen:

In Bild a erkennt man das durch einen Klips 1b verschlossene Schlauchende und den auf dem Füllrohr 7 befindlichen Raffbereich 8. Nach dem Verklipsen des Schlauchendes wird der Füllvorgang ausgelöst, wodurch das geschlossene Schlauchende nach vorne in die im Bild b gezeigte Position gedrückt wird. Nach dem Ausstoß der vorgegebenen Portion löst das Dosiergerät den Abschnürvorgang aus. Dazu wird in an sich bekannter Weise gemäß Bild c der Schlauch mit Fingern 1c abgeschnürt und gemäß Bild d ein Zopf 1d gezogen. Auf dem gezogenen Zopf werden gemäß Bild e von der Klippmaschine 6 zwei beabstandete Klipse gesetzt. Hierauf trennt ein Messer 9 zwischen den Klipsen die gefüllte Wurst ab. Sie wird mit einem Förderband oder über eine Abwurfschale wegtransportiert. An dem rechts befindlichen, verschlossenen Schlauchende wiederholt sich der Vorgang.

Selbstverständlich liegt es auch im Rahmen der Erfindung, die erfindungsgemäße Vliesfolie als vorkonfektionierten, an den sich überlappenden Längsrändern geschweißten Schlauch zur Verfügung zu stellen und diesen Schlauch dann dem Füllrohr 7 zuzuführen.

Zusammenfassend bietet die Erfindung den Vorteil, dass nunmehr auch Rohfleischprodukte, insbesondere Rohwurst- und Halbdauerwaren wie Salami schnell und hygienisch mit beliebigem Kaliber verpackt werden und in der Verpackung ausreifen können. Außerdem kann die erfindungsgemäße Vlies-Folie von Rollen bis 2000 m Länge verarbeitet werden, wogegen die bisherigen Därme auf 60 - 80 m Länge beschränkt sind.

## Patentansprüche

1. Verfahren zur Verpackung von Fleischprodukten, insbesondere Wurstwaren, indem eine Flachfolie aus Kunststoff einem Füllrohr zugeführt und dabei in eine etwa zylindrische, das Füllrohr umgebende Form gebracht und an den überlappenden Rändern versiegelt wird, wobei das Fleischprodukt über das Füllrohr (7) in den so gebildeten Folienschlauch (1a) eingefüllt und der Schlauch (1a) anschließend an den Enden verschlossen und vereinzelt wird,
**dadurch gekennzeichnet,**
**dass** die Flachfolie (1) zur Anwendung bei Rohfleischprodukten, insbesondere bei Rohwurst- und Halbdauerwaren aus einem Vlies besteht, das zumindest mit einem Anteil von 80 % aus langfaserigen Kunststoff-Fasern hergestellt wird und eine Wasser- und/oder Dampfdurchlässigkeit von zumindest 40 g/m²d aufweist und dass die verpackten Rohfleischprodukte anschließend durch Feuchtigkeitsentzug und/oder Räuchern haltbar gemacht werden.

2. Verfahren nach Anspruch 1,
**dadurch gekennzeichnet,**
**dass** die Wasser- und D'ampf-Durchlässigkeit zumindest 150 g/m²d beträgt.

3. Verfahren nach Anspruch 1,
**dadurch gekennzeichnet,**
**dass** die Kunststoff-Fasern eine Länge von zumindest 50 mm, vorzugsweise zumindest 100 mm bis zur Endlosfaser aufweisen.

4. Verfahren nach Anspruch 2,
**dadurch gekennzeichnet,**
**dass** das Gewicht der Flachfolie mindestens 20 g/m², höchstens 300 g/m² beträgt, vorzugsweise zwischen 40 g/m² und 200 g/m² liegt.

5. Verfahren nach Anspruch 1,
**dadurch gekennzeichnet,**
**dass** die Kunststoff-Fasern aus Polyamid, Polypropylen, Polyester und/oder Polyethylen bestehen.

6. Verfahren nach Anspruch 1,
**dadurch gekennzeichnet,**
**dass** die Kunststoff-Fasern eine Ummantelung aus heiß- oder hochfrequenzsiegelbaren Material, insbesondere thermoplastischen Kunststoffen aufweisen.

7. Verfahren nach Anspruch 6,
**dadurch gekennzeichnet,**
**dass** die Ummantelung einen niedrigeren Schmelzpunkt aufweist als das ummantelte Material.

8. Verfahren nach Anspruch 1,
**dadurch gekennzeichnet,**
**dass** die Kunststoff-Fasern neben- und übereinander abgelegt und im Spun-Bond-Verfahren miteinander zu einer Vlies-Flachfolie verbunden werden.

9. Verfahren nach Anspruch 1,
**dadurch gekennzeichnet,**
**dass** die Flachfolie (1) ohne Befeuchten dem Füllrohr (7) zugeführt wird.

10. Verfahren nach Anspruch 1,
**dadurch gekennzeichnet,**
**dass** die Flachfolie (1) mit Konservierungsmitteln behandelt wird.

11. Verfahren nach Anspruch 1,
**dadurch gekennzeichnet,**
**dass** die Flachfolie (1) mit einer Lösung von Propylenglykol und/oder Glycerin behandelt wird.

12. Verfahren nach Anspruch 11,
**dadurch gekennzeichnet,**
**dass** die Lösung zusätzlich Kaliumsorbat enthält.

13. Verfahren nach Anspruch 11 oder 12,
**dadurch gekennzeichnet,**
**dass** die Lösung etwa 10 bis 30 % Propylenglykol, etwa 5 bis 20 % Glycerin und gegebenenfalls etwa 1 bis 10 % Kaliumsorbat enthält.

14. Verfahren nach Anspruch 1,
**dadurch gekennzeichnet,**
**dass** die Flachfolie (1) an ihrer dem Fleischprodukt zugewandten Seite eine Beschichtung, insbesondere eine Antihaftbeschichtung, aufweist.

15. Verfahren nach Anspruch 14,
**dadurch gekennzeichnet, dass** die Dicke der Antihaftbeschichtung im µ-Bereich liegt.

16. Verfahren nach Anspruch 14,
**dadurch gekennzeichnet,**
**dass** die Antihaft-Beschichtung aus Cellulose, Acrylat und/oder Flüssigrauch besteht.

17. Verfahren nach Anspruch 1,
**dadurch gekennzeichnet,**
**dass** die Flachfolie (1) maximal etwa 15 % bis etwa 20 % Fremdfasern, insbesondere aus Cellulose, aufweist.

18. Verfahren nach Anspruch 1,
**dadurch gekennzeichnet,**
**dass** an den sich überlappenden, versiegelten Rändern Mikrolöcher angeordnet sind, um die Gas- und Feuchte-Durchlässigkeit zu erhöhen.

19. anwendung von Flachfolie bei der automatischen Verpackung von Nahrungsmitteln, gemäß dem Verfahren nach einem der Ansprüche 1 bis 18,
**dadurch gekennzeichnet,**
**dass** die Flachfolie zur Anwendung bei Rohfleischprodukten, insbesondere von Rohwurst- und Halbdauerwaren, aus einem Vlies mit zumindest einem Anteil von 80 % aus langfaserigen Kunststoff-Fasern besteht und eine Wasser- und/oder Dampf-Durchlässigkeit von zumindest 40 g/m²d aufweist und dass die verpackten Rohfleischprodukte anschließend durch Feuchtigkeitsentzug und/oder Räuchern haltbar gemacht werden.

20. Anwendung nach Anspruch 19,
**dadurch gekennzeichnet,**
**dass** die Folie als vorkonfektionierter, an den sich überlappenden Längsrändern geschweißter Schlauch zur Verfügung gestellt wird.

## Claims

1. Method of packaging meat products, in particular sausage products, wherein a flat film made from plastics material is fed to a filling tube and is shaped into an approximately cylindrical form surrounding the filling tube and is sealed at the overlapping edges, and wherein the meat product is filled into the film tube (1a) thus formed via the filling tube (7) and the tube (1a) is then closed at the ends and separated, **characterised in that** the flat film (1) for use with raw meat products, in particular for raw sausage and semi-perishable products, is made from a non-woven material which is produced with a proportion of at least 80% long plastics fibres and a water and/or steam permeability of at least 40 g/m²d, and that the packed raw meat products are subsequently preserved by the extraction of moisture and/or by smoking.

2. Method as claimed in Claim 1, **characterised in that** the water and steam permeability is at least 150 g/m²d.

3. Method as claimed in Claim 1, **characterised in that** the plastics fibres have a length of at least 50 mm, preferably at least 100 mm up to endless fibres.

4. Method as claimed in Claim 2, **characterised in that** the weight of the flat film is at least 20 g/m², at most 300 g/m², preferably between 40 g/m² and 200 g/m².

5. Method as claimed in Claim 1, **characterised in that** the plastics fibres are made from polyamide, polypropylene, polyester and/or polyethylene.

6. Method as claimed in Claim 1, **characterised in that** the plastics fibres have a casing of material which can be sealed by heat or high frequency, in particular thermoplastic materials.

7. Method as claimed in Claim 6, **characterised in that** the casing has a lower melting point than the encased material.

8. Method as claimed in Claim 1, **characterised in that** the plastics fibres are deposited adjacent to and on top of one another and are connected to one another using the spun-bond process to form a flat non-woven film.

9. Method as claimed in Claim 1, **characterised in that** the flat film (1) is delivered to the filling tube (7) without moistening.

10. Method as claimed in Claim 1, **characterised in that** the flat film (1) is treated with preservatives.

11. Method as claimed in Claim 1, **characterised in that** the flat film (1) is treated with a solution of propylene glycol and/or glycerine.

12. Method as claimed in Claim 11, **characterised in that** in addition the solution contains potassium sorbate.

13. Method as claimed in Claim 11, **characterised in that** the solution contains approximately 10 to 30% propylene glycol, approximately 5 to 20% glycerine and optionally approximately 1 to 10% potassium sorbate.

14. Method as claimed in Claim 1, **characterised in that** the flat film (1) has a coating, in particular a non-stick coating, on its side facing the meat product.

15. Method as claimed in Claim 14, **characterised in that** the thickness of the non-stick coating is in the µ range.

16. Method as claimed in Claim 14, **characterised in that** the non-stick coating is made from cellulose, acrylate and/or liquid smoke.

17. Method as claimed in Claim 1, **characterised in that** the flat film (1) has a maximum of approximately 15% to approximately 20% extraneous fibres, in particular of cellulose.

18. Method as claimed in Claim 1, **characterised in that** microholes are disposed on the overlapping, sealed edges in order to increase the permeability to gas and moisture.

19. Use of flat film in the automatic packaging of foods, using the method as claimed in any one of Claims 1 to 18, **characterised in that** the flat film for use for raw meat products, in particular for raw sausage and semi-perishable products, is made from a non-woven material with a proportion of at least 80% long plastics fibres and a water and/or steam permeability of at least 40 g/m²d, and that the packed raw meat products are subsequently preserved by the extraction of moisture and/or by smoking.

20. Use as claimed in Claim 19, **characterised in that** the film is provided as a prefabricated tube which is welded on the overlapping longitudinal edges.

## Revendications

1. Procédé d'emballage de produits à base de viande, en particulier des charcuteries, dans lequel un feuil aplati en matière plastique est délivré à un tube d'emplissage, en étant alors amené à une forme sensiblement cylindrique entourant ledit tube d'emplissage, puis est scellé sur les bords se chevauchant, le produit à base de viande étant déversé, par l'intermédiaire du tube d'emplissage (7), dans le boudin (1a) en feuil souple ainsi formé, et le tube souple (1a) étant ensuite obturé et dissocié aux extrémités,
**caractérisé par le fait**
**que** le feuil aplati (1), conçu pour être utilisé dans des produits à base de viande crue, en particulier dans des charcuteries crues et des semi-salaisons, est constitué d'un non-tissé qui est fabriqué, au moins selon une part représentant 80 %, à partir de fibres allongées en matière plastique et qui possède une perméabilité à l'eau et/ou à la vapeur d'au moins 40 g/m²d ; et par le fait que les produits emballés à base de viande crue sont ensuite rendus aptes à la conservation par extraction d'humidité et/ou par fumage.

2. Procédé selon la revendication 1,
**caractérisé par le fait**
**que** la perméabilité à l'eau et à la vapeur est d'au moins 150 g/m²d.

3. Procédé selon la revendication 1,
**caractérisé par le fait**
**que** les fibres de matière plastique présentent une longueur d'au moins 50 mm, de préférence d'au moins 100 mm, jusqu'à l'état de fibre sans fin.

4. Procédé selon la revendication 2,
**caractérisé par le fait**
**que** le poids du feuil aplati est d'au moins 20 g/m², au maximum de 300 g/m² et est compris, de préférence, entre 40 g/m² et 200 g/m².

5. Procédé selon la revendication 1,
**caractérisé par le fait**
**que** les fibres de matière plastique consistent en un polyamide, en du polypropylène, du polyester et/ou du polyéthylène.

6. Procédé selon la revendication 1,
**caractérisé par le fait**
**que** les fibres de matière plastique présentent un enrobage apte au scellement à chaud ou par haute fréquence, notamment des matières thermoplastiques.

7. Procédé selon la revendication 6,
**caractérisé par le fait**
**que** l'enrobage présente un point de fusion plus bas que celui du matériau enrobé.

8. Procédé selon la revendication 1,
**caractérisé par le fait**
**que** les fibres de matière plastique sont placées en juxtaposition et en superposition et sont reliées les unes aux autres, par le procédé de production de monofils continus désorientés, pour former un feuil aplati en un non-tissé.

9. Procédé selon la revendication 1,
**caractérisé par le fait**
**que** le feuil aplati (1) est délivré au tube d'emplissage (7) sans humidification.

10. Procédé selon la revendication 1,
**caractérisé par le fait**
**que** le feuil aplati (1) est traité par des agents conservateurs.

11. Procédé selon la revendication 1,
**caractérisé par le fait**
**que** le feuil aplati (1) est traité à l'aide d'une solution de propylène glycol et/ou de glycérine.

12. Procédé selon la revendication 11,
**caractérisé par le fait**
**que** la solution renferme additionnellement du sorbate de potassium.

13. Procédé selon la revendication 11 ou 12,
**caractérisé par le fait**
**que** la solution renferme d'environ 10 à 30 % de propylène glycol, d'environ 5 à 20 % de glycérine et, le cas échéant, d'environ 1 à 10 % de sorbate de potassium.

14. Procédé selon la revendication 1,
**caractérisé par le fait**
**que** le feuil aplati (1) comporte un revêtement, notamment un revêtement anti-adhérent sur sa face tournée vers le produit à base de viande.

15. Procédé selon la revendication 14,
**caractérisé par le fait**
**que** l'épaisseur du revêtement anti-adhérent se situe dans la plage des µ.

16. Procédé selon la revendication 14,
**caractérisé par le fait**
**que** le revêtement anti-adhérent est constitué de cellulose, d'acrylate et/ou de fumées liquides.

17. Procédé selon la revendication 1,
**caractérisé par le fait**
**que** le feuil aplati (1) comprend, au maximum, d'environ 15 % à environ 20 % de fibres rapportées, notamment constituées de cellulose.

18. Procédé selon la revendication 1,
**caractérisé par le fait**
**que** des microperforations se trouvent sur les bords scellés en chevauchement, afin d'accroître la perméabilité aux gaz et à l'humidité.

19. Utilisation d'un feuil aplati lors de l'emballage automatique de produits alimentaires, conformément au procédé selon l'une des revendications 1 à 18,
**caractérisée par le fait**
**que** le feuil aplati, conçu pour être utilisé dans des produits à base de viande crue, en particulier des charcuteries crues et des semi-salaisons, est constitué d'un non-tissé qui renferme au moins une part représentant 80 % de fibres allongées en matière plastique, et qui possède une perméabilité à l'eau et/ou à la vapeur d'au moins 40 g/m²d ; et par le fait que les produits emballés à base de viande crue sont ensuite rendus aptes à la conservation par extraction d'humidité et/ou par fumage.

20. Utilisation selon la revendication 19,
**caractérisée par le fait**
**que** le feuil est fourni en tant que tube souple préfabriqué, soudé sur les bords longitudinaux chevauchants.
